(19) Europäisches Patentamt
European Patent Office
Office européen des brevets

(11) EP 3 348 589 B1

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(51) Int Cl.:
***C08F 36/06*** *(2006.01)* ***C09J 109/00*** *(2006.01)*

(21) Anmeldenummer: **17151585.1**

(22) Anmeldetag: **16.01.2017**

(54) **POLYBUTADIENE, DEREN HERSTELLUNG UND VERWENDUNG**

POLYBUTADIENES, THEIR PREPARATION AND USE

POLYBUTADIÈNE, SA PRODUCTION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.07.2018 Patentblatt 2018/29**

(73) Patentinhaber: **Evonik Degussa GmbH**
**45128 Essen (DE)**

(72) Erfinder:
- **KRANNIG, Kai-Steffen**
  **44137 Dortmund (DE)**
- **HERWIG, Jürgen**
  **46569 Hünxe (DE)**
- **BERLINEANU, Andreas**
  **45772 Marl (DE)**
- **AMMER, Miriam**
  **45665 Recklinghausen (DE)**
- **KEMPER, Philip**
  **48683 Ahaus (DE)**
- **PSCHANTKA, Alexander**
  **48653 Coesfeld (DE)**
- **GROSS-ONNEBRINK, Yvonne**
  **46348 Raesfeld (DE)**
- **BEUERS, Gudula**
  **48249 Dülmen (DE)**
- **BUKOHL, Margit**
  **45770 Marl (DE)**
- **LUCE, Kirsten**
  **44623 Herne (DE)**
- **JITTENMEIER, Siegfried**
  **45768 Marl (DE)**

(56) Entgegenhaltungen:
**EP-A1- 0 511 015 WO-A1-2016/180649**

- **DATABASE WPI Week 197618 Thomson Scientific, London, GB; AN 1976-32602X XP002770329, & JP S51 30287 A (SUMITOMO CHEM CO LTD) 15. März 1976 (1976-03-15)**
- **DATABASE WPI Week 200023 Thomson Scientific, London, GB; AN 2000-266629 XP002770330, & JP 2000 072823 A (UBE IND LTD) 7. März 2000 (2000-03-07)**
- **DATABASE WPI Week 200327 Thomson Scientific, London, GB; AN 2003-273700 XP002771999, & KR 2002 0089764 A (KOREA KUMHO PETROCHEMICAL CO LTD) 30. November 2002 (2002-11-30)**
- **DATABASE WPI Week 199421 Thomson Scientific, London, GB; AN 1994-173786 XP002772000, & JP H06 116317 A (NIPPON GOSEI GOMU KK) 26. April 1994 (1994-04-26)**
- **DATABASE WPI Week 199421 Thomson Scientific, London, GB; AN 1994-173784 XP002772001, & JP H06 116315 A (NIPPON GOSEI GOMU KK) 26. April 1994 (1994-04-26)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 348 589 B1

## Beschreibung

Die vorliegende Erfindung betrifft ein Verfahren zur Herstellung von Polybutadienen.

Die Herstellung von flüssigen Polybutadienen mittels Ziegler-Natta Katalysatoren ist bereits seit den 1960er Jahren bekannt, z. B. aus US 3,040,016. Seitdem wurde eine Vielzahl von Übergangsmetallen wie z.B. Nickel, Titan, Vanadium, Chrom, Molybdän und Cobalt untersucht (US 4,751,275; US 3,778,424; US 6,291,591). Durch Wahl des entsprechenden Übergangsmetalls, können die Polymereigenschaften wie Molekulargewicht und Mikrostruktur gezielt eingestellt werden.

Polybutadiene, die Vinylgruppen aufweisen, können über diese mit sich selbst oder mit anderen Verbindungen vernetzt werden, weshalb Polybutadiene z. B. als Komponenten, wie z. B. als Weichmacher, bei der Herstellung von Gummi oder Kunstkautschuk, oder als Beschichtungsmittel oder Beschichtungsmittelkomponente Verwendung finden.

Flüssige Polybutadiene mit höheren Vinylgehalten (25 bis 75 Molprozent wie nachfolgend definiert) gewinnen zunehmend an Bedeutung, da sie peroxidisch vernetzt werden können und somit der Einsatz von Schwefel zur Vulkanisation reduziert, oder auf Schwefel ganz verzichtet werden kann.

DE 2,261,782 beschreibt ein Verfahren zur Herstellung eines solchen, flüssigen Polybutadiens unter Verwendung von Cobalt in Verbindung mit einer organischen Phosphorspezies, einem Alkylaluminiumhalogenid und Wasser. Ein wesentlicher Nachteil des Verfahrens besteht darin, dass die erforderliche Butadienmenge vollständig vorgelegt wird, sodass bei Fehldosierung ein hohes Energie- und damit Gefährdungspotential besteht. Eine solche Reaktionsführung ist unter heutigen Sicherheitsstandards nicht mehr durchführbar. Darüber hinaus sind die beschriebenen erforderlichen Laufzeiten der Reaktion sehr lang (5 h) und die Monomerkonzentrationen (12,9 % Butadien in Benzol) sehr gering, was zu geringen Raum-/Zeit-Ausbeuten führt und damit bisher die wirtschaftliche Herstellung verhindert hat.

Aufgabe der vorliegenden Erfindung war deshalb die Bereitstellung eines verbesserten Verfahrens zur Herstellung von flüssigen Polybutadienen mit einem Vinylgehalt von größer 25 Molprozent (25 Molprozent Monomereinheiten (A) wie nachfolgend definiert).

Überraschenderweise wurde gefunden, dass diese Aufgabe durch Polybutadiene und ein Verfahren zu deren Herstellung wie nachfolgend sowie in den Ansprüchen definiert gelöst werden kann.

Gegenstand der vorliegenden Erfindung ist deshalb ein Verfahren zur Herstellung von Polybutadien, wie nachfolgend und in den Ansprüchen definiert.

Die Polybutadiene haben den Vorteil, dass sie sicherer und wegen der höheren Raum-/ZeitAusbeute unter geringerem Einsatz von Ressourcen (Lösungsmittel, Energie) hergestellt werden können.

Das bevorzugte Molekulargewicht der flüssigen Polybutadiene begünstigt das Erreichen der benötigten Aushärtungsgeschwindigkeiten bei der Verwendung in Klebstoffformulierungen.

Die Polybutadiene haben außerdem den Vorteil, dass sie bei 20 °C und Normaldruck flüssig sind und vorzugsweise eine Viskosität bei dieser Temperatur im Bereich von 2.000 bis 8.000 mPa s aufweisen, wodurch die Verarbeitung und Dosierung, insbesondere bei der Herstellung von Kunstkautschuk-, Gummi- und Klebstoffzusammensetzungen, einfach möglich ist.

Das erfindungsgemäße Verfahren hat den Vorteil, dass bei Einsatz deutlich geringerer Temperaturen höhere Umsätze in kürzerer Zeit erzielt werden können. Des Weiteren weist das erfindungsgemäße Verfahren eine verbesserte Temperaturführung auf.

Ein weiterer Vorteil des erfindungsgemäßen Verfahrens besteht darin, dass die erforderliche Menge an Butadien fortlaufend zudosiert werden kann und somit eine sicherere Prozessführung ermöglicht wird.

Das erfindungsgemäße Verfahren ermöglicht außerdem den Einsatz einer Reaktionslösung, die einen deutlich höheren Anteil an Butadien in der Reaktionslösung aufweist, wodurch höhere Raum-/Zeit-Ausbeuten erzielt werden können.

Das erfindungsgemäße Verfahren zur Herstellung des Polybutadiens wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z. B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Im Rahmen der vorliegenden Erfindung wird unter dem Begriff "Polybutadien" ein durch Polymerisation von Monomereinheiten mit jeweils wenigstens zwei konjugierten Doppelbindungen verstanden, wobei es sich in Reihenfolge zunehmender Bevorzugung bei wenigstens 80, 85, 90, 95, 98, 99 oder 99,9 % der Monomereinheiten, bevorzugt ausschließlich um 1,3-Butadien handelt. Mögliche weitere Verbindungen (Verunreinigungen) können z. B. Alkane oder Alkene mit 3 bis 5 Kohlenstoffatomen, insbesondere Propen, 1-Buten oder 1,2-Butadien sein.

Polybutadien, welches die aus 1,3-Butadien abgeleiteten Monomereinheiten

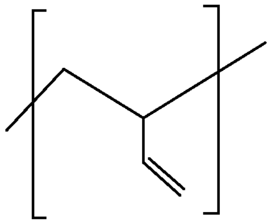

(A)

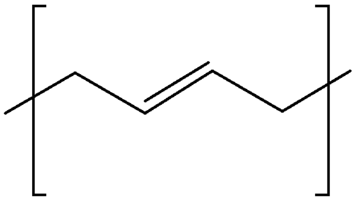

(B)

und

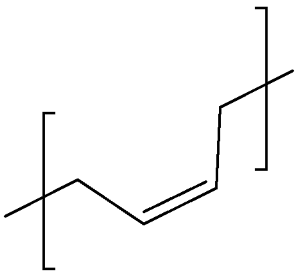

(C)

umfasst,
ist dadurch gekennzeichnet, dass der Anteil von Einheiten der Formel (A) an der im Polybutadien enthaltenen aus 1,3-Butadien abgeleiteten Gesamtheit der Monomereinheiten 25 bis 75 Molprozent, vorzugsweise 50 bis 65 Molprozent und bevorzugt 59 bis 62 Molprozent beträgt, der Anteil von Einheiten der Formel (B) an der im Polybutadien enthaltenen aus 1,3-Butadien abgeleiteten Gesamtheit der Monomereinheiten 0 bis 10 Molprozent, vorzugsweise 1 bis 8 Molprozent und bevorzugt 2 bis 6 Molprozent beträgt, und der Anteil von Einheiten der Formel (C) an der im Polybutadien enthaltenen aus 1,3-Butadien abgeleiteten Gesamtheit der Monomereinheiten 25 bis 75 Molprozent, vorzugsweise 25 bis 40 Molprozent und bevorzugt 35 bis 39 Molprozent beträgt, mit der Maßgabe, dass sich die Gesamtheit aller Monomereinheiten (A), (B) und (C) zu 100 Molprozent ergänzt,
und das Polybutadien eine zahlenmittlere Molmasse von 1.000 bis 3.000 g/mol, vorzugsweise 1.100 bis 1.800 g/mol und bevorzugt 1.200 bis 1.700 g/mol aufweist.

In den mit den Formeln (A), (B) bzw. (C) dargestellten Monomereinheiten, wobei eine eckige Klammer bei der in dieser Anmeldung gewählten formelmäßigen Darstellung die im Polybutadien enthaltenen aus 1,3-Butadien abgeleiteten Monomereinheiten (A), (B) bzw. (C) zeigt, enden die mit der jeweiligen eckigen Klammer versehenen Bindungen nicht etwa mit einer Methylgruppe, sondern die entsprechenden Monomereinheiten sind über diese Bindung mit einer weiteren Monomereinheit verbunden. Die Monomereinheiten (A), (B) und (C) können dabei in beliebiger Reihenfolge im Polymer angeordnet sein. Bevorzugt ist eine statistische Anordnung.

Der Anteil der Monomereinheiten im Polybutadien, die keiner der Formel (A), (B) oder (C) genügen, beträgt vorzugsweise kleiner 20 Molprozent, bevorzugt kleiner 5 Molprozent, besonders bevorzugt kleiner 1 Molprozent und ganz besonders bevorzugt kleiner 0,1 Molprozent bezogen auf die Gesamtheit der Monomereinheiten. Der Anteil der Monomereinheiten im Polybutadien, die keiner der Formel (A), (B) oder (C) genügen, kann durch Verwendung von 1,3-Butadien, welches entsprechend vorzugsweise weniger als 20 Molprozent, bevorzugt weniger als 5 Molprozent, besonders bevorzugt weniger als 1 Molprozent und ganz besonders bevorzugt weniger als 0,1 Molprozent an Verunreinigungen, insbesondere an Dienen, die nicht 1,3-Butadien sind, aufweist, im Herstellprozess gesteuert werden.

Die Bestimmung der molaren Anteile der Monomereinheiten gemäß den Formel (A), (B), und (C) erfolgt durch IR-Spektroskopie bezüglich Polybutadien Standards. Dazu werden die Proben (ca. 80 bis 250 mg) in 10 ml Schwefelkohlenstoff ($CS_2$) gelöst. Bei hohem Vinylgehalt werden niedrige Konzentrationen, bei hohem cis-Gehalt höhere Konzentrationen verwendet. Die Messungen erfolgt in IR-Küvetten mit NaCl-Fenstern und 0,5 mm Schichtdicke. Das Lösemittel wird subtrahiert und das Spektrum im Auswertebereich 1.100 bis 600 $cm^{-1}$ in Extinktion dargestellt. Bei Extinktionen über 1 wird die Messung mit geringerer Konzentration wiederholt. Die Extinktionen über Basislinien der folgenden Signale werden bestimmt:

trans-1,4-Polybutadien: 968 $cm^{-1}$
1,2-Polybutadien: 911 $cm^{-1}$
cis-1,4-Polybutadien: 730 $cm^{-1}$

Die molaren Anteile der Monomerkomponenten ergeben sich zu

$$\%Komp(i) = Ext(i) * 100\% \ / \ ( E(i) * c * d *)$$

mit

Ext(i) = Extinktion über Basislinie
E(i) = Extinktionskoeffizient (Stoff-spezifisch, durch Kalibration zu ermitteln) [E] = L/(g*cm)
d = Schichtdicke der Küvette in cm
c = Konzentration der Probe in g/L

Die Bestimmung der zahlen-/gewichtsmittleren Molmasse und der Dispersität erfolgt durch Gelpermeationschromatie (GPC):
Die Messungen wurden bei 40 °C in Tetrahydrofuran (THF) bei einer Konzentration von 1 g/L und einer Flussrate von 0,3 ml/min durchgeführt. Zur chromatographischen Trennung wurden eine Vorsäule des Typs PSS SDV Micro 5μ / 4,6 x 30 mm und eine Trennsäule des Typs PSS SDV Micro linear S 5μ / 4,6 x 250 mm (2x) verwendet. Die Detektion erfolgte mittels RI-Detektor. Die Kalibration wurde mittels Polybutadienstandards (PSS-Kit Polybutadien-1,4, Mp 831-106000, Part No.:PSS-bdfkit, Mn: 1830/4330/9300/18000/33500) durchgeführt.

Das Polybutadien weist vorzugsweise eine Viskosität bei 20 °C von 2.000 bis 8.000 mPa s, bevorzugt von 3000 bis 6500 mPa s auf. Die Bestimmung der Viskosität (Kegelplatte) erfolgte mit einem Rheometer Physica MCR 301 der ANTON PAAR Germany GmbH gemäß DIN 53018.

Es kann vorteilhaft sein, wenn das Polybutadien eine Dispersität von 2,1 bis 3,0, vorzugsweise 2,5 bis 3,0, bevorzugt 2,6 bis 2,9 aufweist. Die Dispersität ist definiert als zahlenmittlere Molmasse (Mn) geteilt durch gewichtsmittlere Molmasse (Mw).

Bevorzugte Polybutadiene weisen eine Viskosität von 2.000 bis 8.000 mPa s, bevorzugt von 3.000 bis 6.500 mPa s und eine Dispersität von 2,1 bis 3,0, bevorzugt 2,6 bis 2,9 auf.

Besonders bevorzugte Polybutadiene sind solche, bei denen der Anteil von Einheiten der Formel (A) an der im Polybutadien enthaltenen aus 1,3-Butadien abgeleiteten Gesamtheit der Monomereinheiten von 50 bis 65 Molprozent und bevorzugt 59 bis 62 Molprozent beträgt, der Anteil von Einheiten der Formel (B) an der im Polybutadien enthaltenen aus 1,3-Butadien abgeleiteten Gesamtheit der Monomereinheiten 1 bis 8 Molprozent und bevorzugt 2 bis 6 Molprozent beträgt, und der Anteil von Einheiten der Formel (C) an der im Polybutadien enthaltenen aus 1,3-Butadien abgeleiteten Gesamtheit der Monomereinheiten 25 bis 40 Molprozent und bevorzugt 35 bis 39 Molprozent beträgt, mit der Maßgabe, dass sich die Gesamtheit der Monomereinheiten (A), (B) und (C) zu 100 Molprozent ergänzt, und das Polybutadien eine zahlenmittlere Molmasse von 1.100 bis 1.800 g/mol, bevorzugt 1.200 bis 1.700 g/mol aufweist. Ganz besonders bevorzugt sind diese Polybutadiene, wenn sie eine Viskosität von 2.000 bis 8.000 mPa s, bevorzugt von 3.000 bis 6.500 mPa s und eine Dispersität von 2,1 bis 3,0, bevorzugt 2,6 bis 2,9 aufweisen und der Anteil der Monomereinheiten, die keiner der Formel (A), (B) oder (C) genügen, kleiner 5 Molprozent, bevorzugt kleiner 1 Molprozent, besonders bevorzugt kleiner 0,1 Molprozent und ganz besonders bevorzugt 0 Molprozent bezogen auf die Gesamtheit der Monomereinheiten beträgt.

Das Polybutadien wird bevorzugt durch das nachfolgend beschriebene erfindungsgemäße Verfahren zur Herstellung von Polybutadien erhalten.

Das erfindungsgemäße Verfahren zur Herstellung von Polybutadienen durch Polymerisation von 1,3-Butadien in Gegenwart eines Lösungsmittels und eines Katalysatorsystems umfassend eine Cobaltverbindung, eine aluminiumorganische Verbindung, eine organische Phosphorverbindung und Wasser, zeichnet sich dadurch aus, dass eine Mischung aus Katalysatorsystem und Lösungsmittel vorgelegt wird, und das 1,3-Butadien zu dieser Mischung zudosiert wird.

Das eingesetzte 1,3-Butadien kann ausschließlich 1,3-Butadien oder aber auch 1,3-Butadien, welches Verunreinigungen aufweist, enthalten. Vorzugsweise wird 1,3-Butadien eingesetzt, welches weniger als 20 Molprozent, bevorzugt weniger als 5 Molprozent, besonders bevorzugt weniger als 1 Molprozent und ganz besonders bevorzugt weniger als 0,1 Molprozent an Verunreinigungen, insbesondere an Dienen, die nicht 1,3-Butadien sind, als Verunreinigungen, aufweist.

Als Lösungsmittel können in dem erfindungsgemäßen Verfahren insbesondere solche ausgewählt aus der Gruppe umfassend, Aliphaten, Aromaten, Ester und Ether, die jeweils bei Raumtemperatur flüssig sind. In einer bevorzugten Ausführungsform handelt es sich bei dem Lösungsmittel um einen bei der Raumtemperatur flüssigen Aliphaten, beispielsweise Hexan, Heptan, Octan, Cyclohexan, um einen bei der Raumtemperatur (25 °C) flüssigen Aromaten, beispielsweise Benzol, Toluol, um einen bei der Raumtemperatur flüssigen Ester, beispielsweise Ethylacetat, Butylacetat, oder um einen bei der Raumtemperatur flüssigen Ether, beispielsweise Diethyl- und Diisopropylether, Dioxan und Tetrahydrofuran. Lösungsmittelgemische der genannten Lösungsmittel sind in beliebigen Mengenverhältnissen möglich. Bevorzugt wird als Lösungsmittel ein bei Raumtemperatur flüssiger Aliphat, vorzugsweise Hexan, Heptan, Octan oder Cyclohexan, oder ein bei Raumtemperatur flüssiger Aromat, vorzugsweise Benzol oder Toluol eingesetzt. Besonders bevorzugt wird als Lösungsmittel Benzol eingesetzt. Der Anteil des Lösungsmittels am Reaktionsgemisch beträgt vorzugsweise 25 bis 75 Massen-%, bevorzugt 40 bis 70 Massen-% und besonders bevorzugt 45 bis 60 Massen-% bezogen auf die Masse des Reaktionsgemisches.

Das Zudosieren des 1,3-Butadien erfolgt vorzugsweise portionsweise oder kontinuierlich in der Weise, dass nach der Hälfte der gesamten Dauer der Zudosierung 25 bis 60 % vorzugsweise 40 bis 55 %, bevorzugt 50 % der zuzudosierenden Menge an 1,3-Butadien der Mischung zugegeben wurde. Bevorzugt erfolgt die Zudosierung von gleichen Portionen mit gleichbleibender Frequenz, also quasi kontinuierlich oder kontinuierlich.

Die Polymerisation wird vorzugsweise über eine Dauer von 0,5 bis 20 Stunden, bevorzugt 1 bis 10 Stunden und besonders bevorzugt 2,5 bis 4 Stunden durchgeführt.

In dem erfindungsgemäßen Verfahren wird die Polymerisation vorzugsweise bei einem Druck von 2 bis 8 bar, vorzugsweise 3 bis 7 bar durchgeführt. Zur Regulierung des Drucks wird vorzugsweise ein Inertgas verwendet. Der Begriff "Inertgas" bedeutet im Rahmen der vorliegenden Erfindung ein Gas oder Gasgemisch, das in seiner Gesamtheit reaktionsträge ist. Bevorzugt handelt es sich bei dem eingesetzten Inertgas um Stickstoff, Edelgase oder Mischungen davon, besonders bevorzugt um Stickstoff.

Die Polymerisation wird bevorzugt bei einer Temperatur der Reaktionsmischung von 20 bis 60 °C, vorzugsweise 25 bis 40 °C und bevorzugt 30 °C durchgeführt. Es ist deshalb bevorzugt, die Polymerisation in einem Reaktor durchzuführen, der mit entsprechenden Mitteln, wie z. B. Wärmetauschern ausgestattet ist, um die Temperatur der Reaktionsmischung regulieren zu können.

Besonders bevorzugt erfolgt die Polymerisation bei einem Druck von 2 bis 8 bar, vorzugsweise 3 bis 7 bar und einer Temperatur der Reaktionsmischung von 20 bis 60 °C,
vorzugsweise 25 bis 40 °C und bevorzugt 30 °C.

In dem erfindungsgemäßen Verfahren können als Katalysatorsystem alle geeigneten Cobaltverbindungen, insbesondere organischen Cobaltverbindungen eingesetzt werden. Vorzugsweise wird ein Katalysatorsystem eingesetzt, welches als Cobaltverbindung Cobalt 2-Ethyl-Hexanoat, Cobaltchlorid oder Cobaltacetylacetonat, bevorzugt Cobalt 2-Ethyl-Hexanoat oder Cobaltacetylacetonat, besonders bevorzugt Cobalt 2-Ethyl-Hexanoat, aufweist.

Als organische Phosphorverbindungen können z. B. Phosphine, wie z. B. Triphenylphosphin oder Phosphite eingesetzt werden. Insbesondere können als organische Phosphorverbindungen solche der allgemeinen Formel $P(OR^1)(OR^2)(OR^3)$ wobei $R^1$, $R^2$ und $R^3$ gleiche oder verschiedene Alkyl-Alkenyl-, Phenyl-, Tolyl- oder Benzylreste sind. Bevorzugte Alkylreste sind geradkettige, verzweigte oder cyclische Reste mit 1 bis 12 Kohlenstoffatomen, wie Methyl, Ethyl, Propyl, Isopropyl, Butyl, Isobutyl, Hexyl, Octyl, Cyclohexyl, Nonyl, Decanyl, Undecanyl und Dodecanyl. Bevorzugt werden in dem erfindungsgemäßen Verfahren Trimethyl-, Triethyl-, Tripropyl-, Tricyclohexyl-, Triallyl-, Triphenyl-, Diphenylethyl-, Diphenylallyl-, Diphenylbutyl-, Diethylphenyl- oder Dibutylphenylphosphit eingesetzt. Besonders bevorzugt wird als organische Phosphorverbindung Tris (2,4-ditertbutylphenyl)phosphit oder Tris (ortho phenyl phenyl)phosphit eingesetzt.

Als aluminiumorganische Verbindung können alle geeigneten aluminiumorganischen Verbindungen eingesetzt werden. Vorzugsweise werden Dimethylaluminiumchlorid, Diethylaluminiumchlorid, Diisobutylaluminiumchlorid oder Ethylaluminiumsesquichlorid, bevorzugt Diethylaluminiumchlorid oder Ethylaluminiumsesquichlorid eingesetzt.

Bevorzugte Katalysatorsysteme enthalten alle der vorstehend genannten vorzugsweise insbesondere bevorzugt oder ganz besonders bevorzugt eingesetzten Komponenten.

Die Menge an Katalysatorsystem wird vorzugsweise so bemessen, dass das molare Verhältnis von Cobaltverbindung zu Gesamtmenge an eingesetzten 1,3-Butadien von 1 zu 2.500 bis 1 zu 15.000, vorzugsweise 1 zu 5.000 bis 1 zu 7.500 und bevorzugt 1 zu 5.500 bis 1 zu 6.500 beträgt.

Die Polymerisation wird vorzugsweise so durchgeführt, dass ein Umsatz von 50 %, bevorzugt ein Umsatz von 70 % und besonders bevorzugt von größer 80 % bezogen auf die eingesetzten Monomere erhalten wird. Dies kann insbesondere dadurch erreicht werden, dass das Zudosieren des 1,3-Butadien in der oben beschriebenen bevorzugten Weise portionsweise oder kontinuierlich erfolgt.

Zum Abschluss der Polymerisation kann es vorteilhaft sein, die Polymerisationsreaktion abzubrechen. Dies erfolgt vorzugsweise durch quenchen. Als Quenchmittel kann z. B. Wasser oder Methanol eingesetzt werden. Bevorzugt wird eine Menge an Quenchmittel, bevorzugt Wasser, eingesetzt, dass das Volumenverhältnis von Quenchmittel zur Reaktionsgemisch von 0,005 zu 1 bis 1 zu 0,1, bevorzugt von 0,01 zu 1 bis 1 zu 0,5 und besonders bevorzugt von 0,05 zu 1 bis 1 zu 0,75 beträgt.

Das nach der Polymerisation erhaltene Reaktionsgemisch, welches gegebenenfalls ein Quenchmittel enthalten kann, wird vorzugsweise aufgearbeitet, um das Polybutadien von einem oder mehreren der Bestandteile des Reaktionsgemisches zu trennen. Vorzugsweise wird das Polybutadien von allen anderen im Reaktionsgemisch enthaltenen Bestandteilen getrennt.

Die Trennung erfolgt vorzugsweise in zwei Stufen. Bevorzugt erfolgt in einer ersten Stufe eine Trennung in organische und wässrige Phase. In einer zweiten Stufe erfolgt eine Auftrennung der organischen Phase. Dies kann z. B. durch thermische Trennverfahren erfolgen, z. B. durch destillative Behandlung der organischen Phase oder durch Behandlung der organischen Phase in einem Rotations-, Fallfilm- oder Dünnschichtverdampfer. Das thermische Trennverfahren kann bei Normaldruck oder Unterdruck durchgeführt werden. Vorzugsweise wird das thermische Trennverfahren bei Unterdruck, z. B. bei Wasserstrahlpumpen- oder Ölpumpenvakuum, vorzugsweise bei einem Druck kleiner 1 $mbar_{abs}$ durchgeführt.

Das erfindungsgemäße Verfahren kann unter Verwendung von herkömmlichen, kommerziell verfügbaren Apparaturen durchgeführt werden. Als Apparaturen können z. B. solche aus Glas oder Stahl, insbesondere Edelstahl (z. B. V2A oder V4A Stahl), eingesetzt werden. Einsetzbar sind beispielsweise Glas- oder Metallreaktoren mit Manteltemperierung via Thermostat mit Rührreaktor oder Temperierung über einen externen Kreislauf (Loop Reaktor), Flashbehälter, Scheidetrichter und/oder Druckfiltrationsvorrichtungen.

Mit dem erfindungsgemäßen Verfahren lassen sich Polybutadiene, insbesondere die oben beschriebenen Polybutadiene herstellen.

Die Polybutadiene können z. B. zur Herstellung von Gummi, Kunstkautschuk, Reifen, Klebstoffformulierungen, Flexodruckplatten, Beschichtungsmittel, Beschichtungszusammensetzungen, Beschichtungsmittelkomponente, im Recycling von Gummi und als Weichmacher verwendet werden

Entsprechende Zusammensetzungen sind deshalb solche, die die Polybutadiene oder Umsetzungsprodukte von Polybutadienen mit anderen Verbindungen enthalten.

Bevorzugte Zusammensetzungen sind solche, bei denen der Anteil der Polybutadiene, die in der Zusammensetzung enthalten sind oder zur Herstellung der Umsetzungsprodukte eingesetzt wurden, bezogen auf die Zusammensetzung von 0,1 bis 90 Gew.-%, vorzugsweise von 1 bis 50 Gew.-% und besonders bevorzugt von 5 bis 40 Gew.-% beträgt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert, ohne darauf beschränkt zu sein. Alternative Ausführungsformen der vorliegenden Erfindung sind in analoger Weise erhältlich.

**Beispiele:**

**Beispiel 1:**

In einem 5L Metallreaktor wurden 980 ml Benzol, 1,48 mmol Co(2-Ethylhexanoat), 3,03 mmol Tri phenyl phosphit und 27,6 mmol Wasser vereinigt.

Mittels Stickstoff wurde der Druck im Reaktionsgefäß auf 3,5 bar erhöht und 11,85 mol Butadien rasch zudosiert. Nach vollständiger Zugabe wurden 29,51 mmol Diethylaluminiumchlorid hinzugefügt und das Reaktionsgemisch für 4 h gerührt und mittels Mantelkühler und Thermostat konstant auf ca. 50 °C temperiert.

Zur Terminierung der Polymerisation wurde das Reaktionsgemisch mit 600 ml Wasser gequencht und verbleibendes Butadien mittels Stickstoff ausgetrieben.

Die organische Phase wurde von der wässrigen Phase getrennt, filtriert und am Rotationsverdampfer bzw. über einen Dünnschichtverdampfer im Vakuum ($p < 1$ mbar, $T = 130$ °C) vom Lösungsmittel befreit.

**Beispiel 2:**

In einem 5L Metallreaktor wurden 982 ml Benzol, 2,01 mmol Co(2-Ethylhexanoat), 6,03 mmol Tris(2,4-di-tert-butylphenyl) phosphit, 19,22 mmol Wasser und 16,28 mmol Ethylaluminiumsesquichlorid vereinigt und bei Raumtemperatur für 10 min gerührt.

Mittels Stickstoff wurde der Druck im Reaktionsgefäß auf 3,5 bar erhöht und 11,84 mol Butadien wurde über einen Zeitraum von 2,4 h kontinuierlich zugegeben. Das Reaktionsgemisch wurde über den Verlauf der Reaktion konstant auf ca. 30 °C mittels Mantelkühler über Thermostat temperiert. Nach Abschluss der Zugabe wurde das Reaktionsgemisch für weitere 5 min gerührt. Zur Terminierung der Polymerisation wurde das Reaktionsgemisch mit 1.000 ml Wasser gequencht und verbleibendes Butadien mittels Stickstoff ausgetrieben.

Die organische Phase wurde von der wässrigen Phase getrennt, filtriert und am Rotationsverdampfer bzw. über einen Dünnschichtverdampfer im Vakuum ($p < 1$ mbar, $T = 130$ °C) vom Lösungsmittel befreit.

**Beispiel 3:**

In einem 5L Metallreaktor wurden 1.403 ml Benzol, 3,01 mmol Co(2-Ethylhexanoat), 10,22 mmol Tris(2,4-di-tert-butylphenyl) phosphit, 24,81 mmol Wasser und 27,15 mmol Ethylaluminiumsesquichlorid vereinigt und bei Raumtemperatur für 10 min gerührt.

Mittels Stickstoff wurde der Druck im Reaktionsgefäß auf 3,5 bar erhöht und 17,76 mol Butadien wurde über einen Zeitraum von 3,5 h kontinuierlich zugegeben. Das Reaktionsgemisch wurde über den Verlauf der Reaktion konstant auf ca. 28 °C mittels Mantelkühler über Thermostat temperiert. Nach Abschluss der Zugabe wurde das Reaktionsgemisch für weitere 20 min gerührt. Zur Terminierung der Polymerisation wurde das Reaktionsgemisch mit 1.500 ml Wasser gequencht und verbleibendes Butadien mittels Stickstoff ausgetrieben.

Die organische Phase wurde von der wässrigen Phase getrennt, filtriert und am Rotationsverdampfer bzw. über einen Dünnschichtverdampfer im Vakuum ($p < 1$ mbar, $T = 130$ °C) vom Lösungsmittel befreit.

Einige Eigenschaften der hergestellten Polybutadiene wurden wie oben beschrieben bestimmt. Die Ergebnisse sind in Tabelle 1a wiedergegeben.

Tabelle 1a: Eigenschaften der hergestellten Polybutadiene

| # | 1,2-Vinyl [%] | 1,4-cis [%] | 1,4-trans [%] | Mn [g/mol] | Mw [g/mol] | D | Viskosität [mPa*s] | Umsatz [%] |
|---|---|---|---|---|---|---|---|---|
| Beispiel 1 | 59 | 37 | 4 | 1.748 | 3.921 | 2,24 | 3.578 | 51,6 |
| Beispiel 2 | 58 | 38 | 4 | 1.526 | 4.245 | 2,78 | 4.432 | 81,7 |
| Beispiel 3 | 61 | 36 | 3 | 1.264 | 3.628 | 2,87 | 5.228 | 83,8 |

**Beispiel 4: Herstellung von Klebstoffformulierungen**

Zur Untersuchung der Eigenschaften in Klebstoffformulierungen wurden mehrere Reaktionsansätze gemäß der Beispiele 1 und 2 durchgeführt, vereinigt und am Dünnschichtverdampfer von restlichem Lösungsmittel befreit. Beispiel 4 resultiert aus der Vereinigung von sechs Einzelversuchen gemäß Beispiel 1, Beispiel 5 aus der Vereinigung von vier Einzelversuchen gemäß Beispiel 2. Des Weiteren wurde das Produkt LITHERNE® PH der Firma Synthomer verwendet. Die untersuchten Eigenschaften sind in Tabelle 1b dargestellt.

Tabelle 1b: Eigenschaften der untersuchten Polybutadiene

| # | 1,2-Vinyl [%] | 1,4-cis [%] | 1,4-trans [%] | Mn [g/mol] | Mw [g/mol] | D | Viskosität [mPa*s] |
|---|---|---|---|---|---|---|---|
| Beispiel 4 | 59 | 37 | 4 | 1.571 | 3.486 | 2,22 | 3.531 |
| Beispiel 5 | 58 | 38 | 4 | 1.480 | 4.018 | 2,71 | 4.940 |
| LITHENE® PH = Referenz | 45 | 34 | 21 | 2.653 | 6.600 | 2,49 | 11.240 |

Wie den Tabellen 1a und 1b zu entnehmen ist, zeichnen sich die erfindungsgemäß hergestellten Polybutadiene durch einen hohen 1,4-cis und niedrigen 1,4-trans Gehalt sowie eine niedrige Viskosität bezogen auf den hohen 1,2-vinyl-Gehalt aus.

Einige der in den Tabellen 1a und 1b genannten Polybutadiene wurden in Klebstoffformulierungen eingesetzt und im Vergleich zur Referenz LITHENE® PH geprüft. Dazu wurden die Polybutadiene in einem Vakuumdissolver mit der gleichen Menge, der für diese Anwendung üblichen Rohstoffe, wie ZnO, Stearinsäure, Kreide, Talkum, Schwefel, Vulkanisationsbeschleuniger etc. vermischt. Die genaue Zusammensetzung der geprüften Formulierungen sind Tabelle 2 zu entnehmen.

Tabelle 2: Zusammensetzung der Formulierungen (Angaben in Massen-%)

| **Formulierung** | **1** | **2** |
|---|---|---|
| LITHENE® PH (Synthomer) | 19 | - |
| Beispiel 5 | - | 19 |
| POLYVEST® MA 75 (Evonik Industries AG) | 4 | 4 |
| Polyisopren LIR 50 (Flüssigkautschuk der Kuraray) | 8 | 8 |
| IONOL® LC (Raschig GmbH) | 1 | 1 |
| IRGAFOS® 168 (BASFSE) | 0,2 | 0,2 |
| IRGANOX® 1520 L (BASFSE) | 0,1 | 0,1 |
| Flammruss 101 (Orion Engineered Carbons GmbH) | 1 | 1 |
| Schwefel | 3,3 | 3,3 |
| ZnO | 3 | 3 |
| Stearinsäure | 0,3 | 0,3 |
| CaO | 1 | 1 |
| Alpha Talc CT P (Alpha Calcit Füllstoff GmbH & Co. KG) | 6 | 6 |
| OMYACARB® 2 AL (Omya) | 50 | 50 |
| VULKACIT® DM/C (Lanxess) | 3 | 3 |
| VULKACIT® ZBEC (Lanxess) | 0,1 | 0,1 |
| | 100 | 100 |

**Beispiel 5: Ausprüfung der Klebstoffformulierungen**

Die Bestimmung der Härte nach Shore A erfolgte entsprechend der DIN 53505-A mit dem Gerät SHOREdigital Shore Durometer A der Fa. BAQ GmbH an Probekörpern mit 50 mm Durchmesser und 6 mm Dicke, mehr als 16 Stunden nach der Vulkanisation bei 23 °C. An jedem Probekörper wurde an 6 verschiedenen Stellen je eine Messung ausgeführt. Die angegebenen Härten nach Shore A sind Mittelwerte der Einzelmessungen.

Die Zugfestigkeit und Reißdehnung wurden wie folgt bestimmt:
Es wurden Folien mit definierter Schichtstärke von 3 mm erstellt und 30 Minuten bei 170 °C vernetzt. Aus besagten Folien wurden die eigentlichen Prüfkörper von 15 mm Breite und ca. 100 mm Länge geschnitten. Die Zugversuche wurden mit der Universalprüfmaschine inspekt table 10kn-1EDC2/300W, TM Standard von der Fa. Hegewald und Peschke durchgeführt. Die Prüfung erfolgte nach DIN EN ISO 527 mit einer Einspannlänge von 50 mm, bei Raumtemperatur und einer Prüfgeschwindigkeit von 5 mm/min. Die Ergebnisse sind in Tabelle 3 dargestellt:

Tabelle 3: Ergebnisse der Zugfestigkeit- und Reißdehnungsprüfung

| **Eigenschaften der Formulierung** | **1** | **2** |
|---|---|---|
| Viskosität [Pa s]<br>bei 23 °C 1[1/s] | 1.432 | 839 |
| **Einbrennbedingungen**<br>**30 Minuten 170 °C** | | |

(fortgesetzt)

| Eigenschaften der Formulierung | 1 | 2 |
|---|---|---|
| Shore Härte A | 74 | 72 |
| Zugfestigkeit [MPa] | 2,4 | 2,87 |
| Reißdehnung [%] | 91 | 98 |

Wie der Tabelle 3 entnommen werden kann, weist die auf Beispiel 5 basierte Formulierung 2 eine deutlich niedrigere Viskosität und das bessere Verhältnis Festigkeit zu Elastizität auf.

Die Zugscherfestigkeit wurde wie folgt bestimmt:
Zur Bestimmung der Zugscherfestigkeit wurde auf verschiedenen Substraten eine Fläche von 25 x 20 mm mit den Formulierungen 1 bis 3 verklebt und 30 Minuten bei 170 °C vernetzt.

Die Zugscherversuche wurden mit der Universalprüfmaschine inspekt table 10kn-1EDC2/300W, TM Standard von der Fa. Hegewald und Peschke durchgeführt. Die Prüfung erfolgte nach DIN EN 1465 bei Raumtemperatur und einer Prüfgeschwindigkeit von 5 mm/min. Die Ergebnisse sind in Tabelle 3 dargestellt:

Tabelle 4: Ergebnisse der Zugscherfestigkeitsprüfung

| Eigenschaften der Formulierung | 1 | 2 |
|---|---|---|
| **Einbrennbedingungen 30 min. 170 °C** | | |
| Zugscherfestigkeit auf Stahl [MPa] | 2,63 | 3,0 |
| Zugscherfestigkeit auf galvanisierten Stahl [MPa] | 2,58 | 2,9 |
| Zugscherfestigkeit auf Aluminium [MPa] | 2,44 | 2,7 |
| Zugscherfestigkeit auf Elektrotauchlack [MPa] | 2,02 | 2,4 |

Die Ergebnisse der Ausprüfung sind in Tabelle 4 dargestellt. Es ist deutlich zu erkennen, dass die Verwendung von erfindungsgemäß hergestellten Polybutadienen bessere Zugscherfestigkeiten auf allen genannten Substraten führt, als die Referenz, die mit Verfahren nach dem Stand der Technik hergestellt wurde.

## Patentansprüche

1. Verfahren zur Herstellung von Polybutadienen durch Polymerisation von 1,3-Butadien in Gegenwart eines Lösungsmittels und eines Katalysatorsystems umfassend

   a) eine Cobaltverbindung,
   b) eine aluminiumorganische Verbindung,
   c) eine organische Phosphorverbindung und
   d) Wasser,

   **dadurch gekennzeichnet, dass** eine Mischung aus Katalysatorsystem und Lösungsmittel vorgelegt wird, und das 1,3-Butadien zu dieser Mischung zudosiert wird.

2. Verfahren nach Anspruch 1, **dadurch gekennzeichnet, dass** die Polymerisation bei einem Druck von 2 bis 7 bar durchgeführt wird.

3. Verfahren nach Anspruch 1 oder 2, **dadurch gekennzeichnet, dass** die Polymerisation bei einer Temperatur der Reaktionsmischung von 20 bis 60 °C durchgeführt wird.

4. Verfahren nach mindestens einem der Ansprüche 1 bis 3, **dadurch gekennzeichnet, dass** als Cobaltverbindung Cobalt 2-Ethyl-Hexanoat eingesetzt wird.

5. Verfahren nach mindestens einem der Ansprüche 1 bis 4, **dadurch gekennzeichnet, dass** als organische Phosphorverbindung Tris (2,4-ditertbutylphenyl)phosphit oder Tris (ortho phenyl phenyl)phosphit eingesetzt wird.

6. Verfahren nach mindestens einem der Ansprüche 1 bis 5, **dadurch gekennzeichnet, dass** als aluminiumorganische Verbindung Ethylaluminiumsesquichlorid oder Diethylaluminiumchlorid eingesetzt wird.

7. Verfahren nach mindestens einem der Ansprüche 1 bis 6, **dadurch gekennzeichnet, dass** das molare Verhältnis von Cobaltverbindung zu Gesamtmenge an eingesetzten 1,3-Butadien von 1 zu 2.500 bis 1 zu 15.000 beträgt.

8. Verfahren nach mindestens einem der Ansprüche 1 bis 7, **dadurch gekennzeichnet, dass** ein Polybutadien hergestellt wird, welches die aus 1,3-Butadien abgeleiteten Monomereinheiten

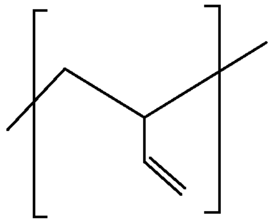

(A)

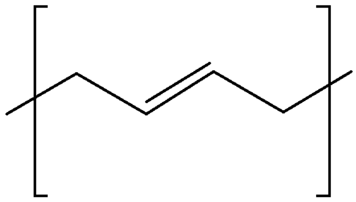

(B)

und

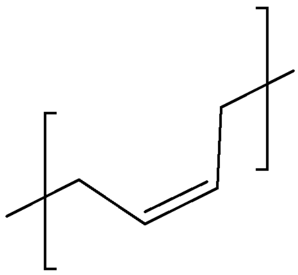

(C)

umfasst,
wobei der Anteil von Einheiten der Formel (A) an der im Polybutadien enthaltenen aus 1,3-Butadien abgeleiteten Gesamtheit der Monomereinheiten 25 bis 75 Molprozent beträgt, der Anteil von Einheiten der Formel (B) an der im Polybutadien enthaltenen aus 1,3-Butadien abgeleiteten Gesamtheit der Monomereinheiten 0 bis 10 Molprozent beträgt und der Anteil von Einheiten der Formel (C) an der im Polybutadien enthaltenen aus 1,3-Butadien abgeleiteten Gesamtheit der Monomereinheiten 25 bis 75 Molprozent beträgt, mit der Maßgabe, dass sich die Gesamtheit der Monomereinheiten (A), (B) und (C) zu 100 Molprozent ergänzt, und das Polybutadien eine zahlenmittlere Molmasse von 1.000 bis 3.000 g/mol aufweist.

9. Verfahren nach Anspruch 8, **dadurch gekennzeichnet, dass** das Polybutadien eine Viskosität von 2.000 bis 8.000 mPa s aufweist.

10. Verfahren nach Anspruch 8 oder 9, **dadurch gekennzeichnet, dass** das Polybutadien eine Dispersität von 2,1 bis 3,0 aufweist.

## Claims

1. Method for preparing polybutadienes by polymerizing 1,3-butadiene in the presence of a solvent and a catalyst system comprising

   a) a cobalt compound,
   b) an organoaluminium compound,
   c) an organophosphorus compound and
   d) water,

   **characterized in that** a mixture of catalyst system and solvent is initially charged and the 1,3-butadiene is metered into this mixture.

2. Method according to Claim 1, **characterized in that** the polymerization is carried out at a pressure of 2 to 7 bar.

3. Method according to Claim 1 or 2, **characterized in that** the polymerization is carried out at a temperature of the reaction mixture of 20 to 60°C.

4. Method according to at least one of Claims 1 to 3, **characterized in that** the cobalt compound used is cobalt 2-ethylhexanoate.

5. Method according to at least one of Claims 1 to 4, **characterized in that** the organophosphorus compound used is tris(2,4-di-tert-butylphenyl) phosphite or tris(ortho-phenylphenyl) phosphite.

6. Method according to at least one of Claims 1 to 5, **characterized in that** the organoaluminium compound used is ethylaluminium sesquichloride or diethylaluminium chloride.

7. Method according to at least one of Claims 1 to 6, **characterized in that** the molar ratio of cobalt compound to total amount of 1,3-butadiene used is from 1:2500 to 1:15 000.

8. Method according to at least one of Claims 1 to 7, **characterized in that** a polybutadiene is prepared which comprises the monomer units derived from 1,3-butadiene

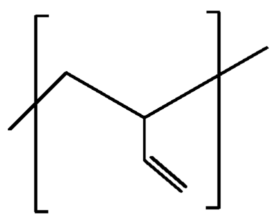

(A)

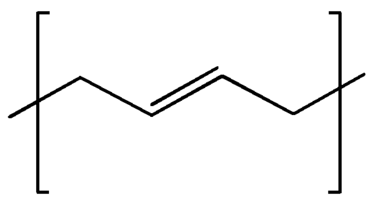

(B)

and

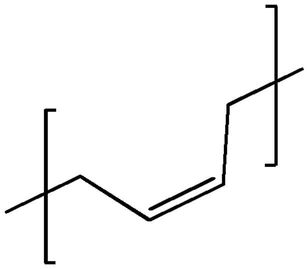

(C),

wherein the proportion of units of the formula (A) in the entirety of the monomer units derived from 1,3-butadiene present in the polybutadiene is 25 to 75 mole percent, the proportion of units of the formula (B) in the entirety of the monomer units derived from 1,3-butadiene present in the polybutadiene is 0 to 10 mole percent and the proportion of units of the formula (C) in the entirety of the monomer units derived from 1,3-butadiene present in the polybutadiene is 25 to 75 mole percent, with the proviso that the entirety of the monomer units (A), (B) and (C) add up to 100 mole percent, and the polybutadiene has a number-average molar mass of 1000 to 3000 g/mol.

**9.** Method according to Claim 8, **characterized in that** the polybutadiene has a viscosity of 2000 to 8000 mPa s.

**10.** Method according to Claim 8 or 9, **characterized in that** the polybutadiene has a dispersity of 2.1 to 3.0.

## Revendications

**1.** Procédé de fabrication de polybutadiènes par polymérisation de 1,3-butadiène en présence d'un solvant et d'un système catalytique, comprenant :

a) un composé de cobalt,
b) un composé organique d'aluminium,
c) un composé organique de phosphore, et
d) de l'eau,

**caractérisé en ce qu'**un mélange du système catalytique et du solvant est chargé initialement, et le 1,3-butadiène est ajouté à ce mélange.

**2.** Procédé selon la revendication 1, **caractérisé en ce que** la polymérisation est réalisée à une pression de 2 à 7 bar.

**3.** Procédé selon la revendication 1 ou 2, **caractérisé en ce que** la polymérisation est réalisée à une température du mélange réactionnel de 20 à 60 °C.

**4.** Procédé selon au moins l'une quelconque des revendications 1 à 3, **caractérisé en ce que** le 2-éthyl-hexanoate de cobalt est utilisé en tant que composé de cobalt.

**5.** Procédé selon au moins l'une quelconque des revendications 1 à 4, **caractérisé en ce que** le tris(2,4-di-tert.-butylphényl)phosphite ou le tris(ortho-phénylphényl)phosphite est utilisé en tant que composé organique de phosphore.

**6.** Procédé selon au moins l'une quelconque des revendications 1 à 5, **caractérisé en ce que** le sesquichlorure d'éthyl-aluminium ou le chlorure de diéthyl-aluminium est utilisé en tant que composé organique d'aluminium.

**7.** Procédé selon au moins l'une quelconque des revendications 1 à 6, **caractérisé en ce que** le rapport molaire entre le composé de cobalt et la quantité totale de 1,3-butadiène utilisé est de 1 à 2 500 sur 1 à 15 000.

**8.** Procédé selon au moins l'une quelconque des revendications 1 à 7, **caractérisé en ce qu'**un polybutadiène est utilisé, qui comprend les unités monomères dérivées de 1,3-butadiène

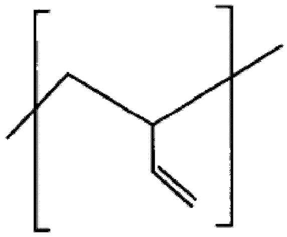

(A)

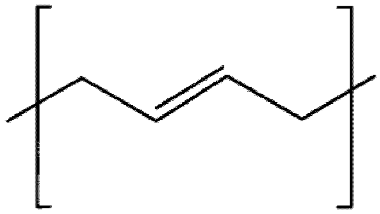

(B)

et

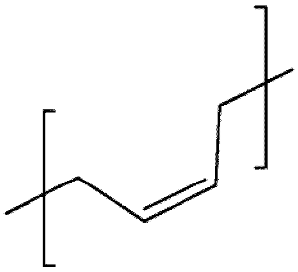

(C)

la proportion d'unités de formule (A) par rapport à la totalité des unités monomères dérivées de 1,3-butadiène contenues dans le polybutadiène étant de 25 à 75 pour cent en moles,
la proportion d'unités de formule (B) par rapport à la totalité des unités monomères dérivées de 1,3-butadiène contenues dans le polybutadiène étant de 0 à 10 pour cent en moles,
et la proportion d'unités de formule (C) par rapport à la totalité des unités monomères dérivées de 1,3-butadiène contenues dans le polybutadiène étant de 25 à 75 pour cent en moles,
à condition que la totalité des unités monomères (A), (B) et (C) soit de 100 pour cent en moles, et le polybutadiène présente une masse molaire moyenne en nombre de 1 000 à 3 000 g/mol.

**9.** Procédé selon la revendication 8, **caractérisé en ce que** le polybutadiène présente une viscosité de 2 000 à 8 000 mPas.

**10.** Procédé selon la revendication 8 ou 9, **caractérisé en ce que** le polybutadiène présente une dispersité de 2,1 à 3,0.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3040016 A
- US 4751275 A
- US 3778424 A
- US 6291591 B
- DE 2261782